# EUROPEAN PATENT SPECIFICATION

(11) **EP 2 077 733 B1**
(45) Date of publication and mention of the grant of the patent: **27.04.2011**
(21) Application number: 07839910.2
(22) Date of filing: 02.11.2007
(51) Int. Cl.: A41D 31/02, B32B 7/00

(54) **WIND RESISTANT AND WATER VAPOR PERMEABLE GARMENTS**
WINDUNDURCHLÄSSIGE UND WASSERDAMPFDURCHLÄSSIGE KLEIDUNGSSTÜCKE
VÊTEMENTS COUPE-VENT, PERMÉABLES À LA VAPEUR D'EAU

(30) Priority: 03.11.2006 US 592350
(43) Date of publication of application: 15.07.2009
(73) Proprietor: E.I. DU PONT DE NEMOURS AND COMPANY, Wilmington, DE 19898 (US)
(72) Inventor: CONLEY, Jill A., Midlothian, VA 23112 (US); GUCKERT, Joseph Robert, Chester, VA 23836 (US); MARIN, Robert Anthony, Midlothian, VA 23114 (US); PALMER, George Bruce, Richmond, VA 23221 (US)
(74) Representative: Dannenberger, Oliver Andre
(86) International application number: PCT/US2007/023147
(87) International publication number: WO 2008/057419

(56) References cited:
- GB-A- 2 416 781
- US-A1- 2005 067 732

## Description

### FIELD OF THE INVENTION

This invention relates to a multi-layer moisture and airflow management garment incorporating a moisture and air management layer. The invention as claimed and disclosed has particular applications in outerwear.

### BACKGROUND OF THE INVENTION

Protective garments for wear in rain and other wet conditions should keep the wearer dry by allowing perspiration to evaporate from the wearer to the atmosphere. "Breathable" materials that do permit evaporation of perspiration have tended to wet through from the rain, and they are not truly waterproof. Oilskins, polyurethane-coated fabrics, polyvinyl chloride films and other materials are waterproof but do not allow satisfactory evaporation of perspiration.

It is widely recognized that garments must be "breathable" to be comfortable. Two factors that contribute to the level of comfort of a garment include the amount of air that does or does not pass through a garment as well as the amount of perspiration transmitted from inside to outside so that the undergarments do not become wet and so natural evaporative cooling effects can be achieved. However even recent developments in breathable fabric articles using microporous films tend to limit moisture vapor transmission if air permeability is to be controlled. GB 2 416 781 A discloses a typical layered material that is permeable to water vapor, but impermeable to liquid water.

The present invention is directed towards a layered material for a garment that provides controlled air permeability in the presence of high vapor transmittance.

### SUMMARY OF THE INVENTION

The invention is directed to an article of apparel having the ability to pass moisture vapor while protecting the wearer from wind comprising a composite fabric of at least one fabric layer adjacent to and in a face-to-face relationship with a nanofiber layer according to claim 1.

### DETAILED DESCRIPTION

The invention comprises a nanofiber layer adjacent to a fabric layer and optionally bonded thereto over at least a fraction of its surface. The terms "nanofiber layer" and "nanoweb" are used interchangeably herein.

The term "nanofiber" as used herein refers to fibers having a number average diameter or cross-section less than about 1000 nm, even less than about 800 nm, even between about 50 nm and 500 nm, and even between about 100 and 400 nm. The term diameter as used herein includes the greatest cross-section of non-round shapes.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials.

"Calendering" is the process of passing a web through a nip between two rolls. The rolls may be in contact with each other, or there may be a fixed or variable gap between the roll surfaces. An "unpatterned" roll is one which has a smooth surface within the capability of the process used to manufacture them. There are no points or patterns to deliberately produce a pattern on the web as it passed through the nip, unlike a point bonding roll.

By "article of apparel" or "garment" is meant any item that is worn by the user to protect some region of the user's body from weather or other factors in the environment outside the body. For example coats, jackets, pants, hats, gloves, shoes, socks, and shirts would all be considered articles of apparel or garments under this definition.

The invention is directed to a garment having a high moisture vapor transmission rate (MVTR) while having a limited and controlled air permeability. The garment comprises a nanofiber layer that in turn comprises at least one porous layer of polymeric nanofibers having a basis weight of between about 1 g/m² and about 100 g/m².

The garment of the invention is a composite fabric which comprises at least a first fabric layer adjacent to and in a face-to-face relationship with the nanofiber layer, and further comprises a second fabric layer adjacent to and in a face-to-face relationship with the nanofiber layer and on the opposite side of the nanofiber layer from the first fabric layer.

The garment of the invention further has regions with a Frazier air permeability of no greater than about 7.6 m³/m²/min, and an MVTR per ASTM E-96B method of greater than about 500 g/m²/day.

The nanoweb may comprise primarily or exclusively nanofibers that are produced by electrospinning, such as classical electrospinning or electroblowing, and in certain circumstances by meltblowing processes.

Classical electrospinning is a technique illustrated in U.S. Patent No. 4,127,706, wherein a high voltage is applied to a polymer in solution to create nanofibers and nonwoven mats.

The "electroblowing" process for producing nanowebs is disclosed in U.S. Patent Publication No. 2005-0067732 A1. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of substantially continuous nanofibers into commercial sizes and quantities of nanowebs at basis weights in excess of about 1 g/m², even as high as about 40 g/m² or greater, in a relatively short time period.

The fabric layer component of the invention can be arranged on the collector to collect and combine the nanoweb spun on the fabric layer, so that the composite of the fabric layer/nanoweb is used as the fabric of the invention. Alternatively, the nanoweb can be collected separately, optionally subjected to post-processing, such as calendering, coating or the like, and later combined with one or more fabric layers.

Polymer materials that can be used in forming the nanofibers of the nanowebs are not particularly limited and include both addition polymers and condensation polymers such as polyacetals, polyamides, including highly aromatic polyamides such as meta- and para-aramids, polyester, polyolefins, cellulose ether and ester, polyalkylene sulfide, polyarylene oxide, polysulfone, modified polysulfone polymers, and mixtures thereof. Preferred polymers include, poly(vinylchloride), polymethylmethacrylate (and other acrylic resins), polystyrene, and copolymers thereof (including ABA type block copolymers), poly(vinylidene fluoride), poly(vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low crystallinity polyvinylidene fluoride and polyvinylalcohol materials. One preferred class of polyamide condensation polymers are nylon materials, such as nylon-6, nylon-6,6, nylon 6,6-6,10 and the like. When the polymer nanowebs of the invention are formed by meltblowing, any thermoplastic polymer capable of being meltblown into nanofibers can be used, including polyesters such as poly(ethylene terephthalate), polyolefins, and polyamides, such as the nylon polymers listed above.

The as-spun nanoweb of the present invention can be calendered in order to impart the desired physical properties to the fabric of the invention, as disclosed in U.S. Patent Application 2008/070463. The as-spun nanoweb can be fed into the nip between two unpatterned rolls in which one roll is an unpatterned soft roll and one roll is an unpatterned hard roll, and the temperature of the hard roll is maintained at a temperature that is between the T_{g}, herein defined as the temperature at which the polymer undergoes a transition from glassy to rubbery state, and the Tₒₘ, herein defined as the temperature of the onset of melting of the polymer, such that the nanofibers of the nanoweb are at a plasticized state when passing through the calendar nip. The composition and hardness of the rolls can be varied to yield the desired end use properties of the fabric. One roll can be a hard metal, such as stainless steel, and the other a soft-metal or polymer-coated roll or a composite roll having a hardness less than Rockwell B 70. The residence time of the web in the nip between the two rolls is controlled by the line speed of the web, preferably between about 1 m/min and about 50 m/min, and the footprint between the two rolls is the MD distance that the web travels in contact with both rolls simultaneously. The footprint is controlled by the pressure exerted at the nip between the two rolls and is measured generally in force per linear CD dimension of roll, and is preferably between about 1 mm and about 30 mm.

Further, the nanoweb can be stretched, optionally while being heated to a temperature that is between the T_{g} and the lowest Tₒₘ of the nanofiber polymer. The stretching can take place either before and/or after the web is fed to the calender rolls and in either or both the machine direction or cross direction.

A wide variety of natural and synthetic fabrics are known and may be used as the fabric layer or layers in the present invention, for example, for constructing sportswear, rugged outerwear and outdoor gear, protective clothing, etc. (for example, gloves, aprons, chaps, pants, boots, gators, shirts, jackets, coats, socks, shoes, undergarments, vests, waders, hats, gauntlets, sleeping bags, tents, etc.). Typically, vestments designed for use as rugged outerwear have been constructed of relatively loosely-woven fabrics made from natural and/or synthetic fibers having a relatively low strength or tenacity (for example, nylon, cotton, wool, silk, polyester, polyacrylic, polyolefin, etc.). Each fiber can have a tensile strength or tenacity of less than about 8 grams g/Denier (gpd), more typically less than about 5 gpd, and in some cases below about 3 gpd. Such materials can have a variety of beneficial properties, for example, dyeability, breathability, lightness, comfort, and in some instances, abrasion-resistance.

Different weaving structures and different weaving densities may be used to provide several alternative woven composite fabrics as a component of the invention. Weaving structures such as plain woven structures, reinforced plain woven structures (with double or multiple warps and/or wefts), twill woven structures, reinforced twill woven structures (with double or multiple warps and/or wefts), satin woven structures, reinforced satin woven structures (with double or multiple warps and/or wefts), knits, felts, fleeces, and needlepunched structures may be used. Stretch woven fabrics, ripstops, dobby weaves, and jacquard weaves are also suitable for use in the present invention.

The nanoweb is bonded to the fabric layers over some fraction of its surface and can be bonded to the fabric layers by any means known to one skilled in the art, for example adhesively, thermally, using an ultrasonic field or by solvent bonding. In one embodiment the nanoweb is bonded adhesively using a solution of a polymeric adhesive such as a polyurethane, and allowing the solvent to evaporate. In a further embodiment, when the nanoweb is electrospun directly onto a fabric, the solvent in which the nanoweb is spun is used to achieve solvent bonding.

### Examples

Frazier Air Permeability is a measure of air flow passing through a sheet under a stated pressure differential between the surfaces of the sheet and was conducted according to ASTM D 737, which is hereby incorporated by reference, and is reported in m³/m²/min.

A three-layer fabric construction was made from polyester fleece (available from Shawmut Mills, Stoughton, MA), a nanoweb made from Nylon 6,6, and another layer of polyester fleece. The three-layer fabric construction was produced by laminating the fleece fabric to the nanoweb using a solvent-based urethane adhesive and then laminating that two-layer construction to the backing layer of fleece using a solvent-based urethane adhesive with a "288-pattern" gravure-roll application. The final three-layer fabric construction was then tested for air permeability.

The three-layer fabric construction had a Frazier air permeability of 3.3 m³/m²/min. The three-layer fabric construction was washed five times and then retested and showed a Frazier reading of 3.1 m³/m²/min. The air permeability of a single layer of fleece was measured as 65.5 m³/m²/min, and a two-layer fabric construction consisting of two layers of fleece laminated measured an air permeability of 41.5 m³/m²/min. As can be seen, the nanoweb composite offers a significant improvement over both a single layer of fleece fabric and a double-layer construction of fleece fabric.

Table 1 below lists the various fabric constructions that were tested and the corresponding Frazier measurement for each construction. All constructions were produced by lamination using a solvent-based adhesive. The approximate basis weights of the fabrics are included in Table 1.

**Table 1**

| **Construction** | **Frazier** **(m³/m²/min)** |
|---|---|
| Fleece (180 gsm) / Nanoweb (10gsm) / Ripstop (100 gsm) | 1.98 |
| Fleece (180 gsm) / Nanoweb (10gsm) /Ripstop (100 gsm) 1 wash | 2.16 |
| Fleece (180 gsm) / Nanoweb (10gsm) /Ripstop (100 gsm) 5 washes | 2.32 |
| RipStop (100 gsm) /Nanoweb (10gsm) /Tricot (35 gsm) | 2.47 |
| RipStop (100 gsm) /Nanoweb (10gsm) /Tricot (35 gsm) 1 wash | 2.50 |
| RipStop(100 gsm) /Nanoweb (10gsm) /Tricot (35 gsm) 5 washes | 2.62 |
| Fleece (180 gsm) / Nanoweb (10gsm)/Fleece (180 gsm) 5 washes | 3.11 |
| Fleece (180 gsm) / Nanoweb (10gsm) /Fleece (180 gsm) 1 wash | 3.17 |
| Fleece (180 gsm) / Nanoweb (10gsm) /Fleece (180 gsm) | 3.29 |
| Fleece (180 gsm)/ RipStop (100,gsm) | 4.57 |
| RipStop (100 gsm)/Tricot (35 gsm) | 4.97 |
| RipStop (100 gsm) | 5.18 |
| Nanoweb (10gsm) | 6.52 |
| Tricot (35 gsm) | 29.6 |
| Fleece (180 gsm) / Fleece (180 gsm) | 41.5 |
| Fleece (180 gsm) | 65.5 |

As can be seen from the data above, the nanoweb can greatly control the air permeability of the fabric construction. Additionally, the air permeability can be further reduced through post-processing of the nanoweb structure. Such structures that have used this post-processed nanoweb have shown an air permeability as low as 0.76 m³/m²/min in a Fleece/Nanoweb/Fleece construction.

Another important parameter in apparel is the ability of the fabric to expel moisture vapor from the inside of the jacket to the outside. This parameter is called the Moisture Vapor Transmission Rate (MVTR). Some of the constructions above were also tested for MVTR using the ASTM E-96B method. The results are listed below in Table 2.

**Table 2**

| **Construction** | **MVTR** **(g/m²/day)** |
|---|---|
| Fleece (180 gsm) / Nanoweb (10gsm) / Ripstop (100 gsm) | 2412 |
| RipStop (100 gsm) / Nanoweb (10gsm) /Tricot (35 gsm) | 1347 |
| Fleece (180 gsm) / Nanoweb (10gsm) /Fleece (180 gsm) | 1253 |

As can be seen from the examples, the nanoweb can greatly reduce the air permeability, if so desired, while maintaining a comfortable and acceptable level of moisture vapor transmission.

## Claims

1. An article of apparel having the ability to pass moisture vapor while protecting the wearer from wind comprising a composite fabric which comprises a first fabric layer adjacent to and in a face-to-face relationship with a nanofiber layer, wherein the nanofiber layer comprises at least one porous layer of polymeric nanofibers having a number average diameter between 50 nm to 1000 nm, a basis weight of between 1 g/m² and 100 g/m², **characterized in that** it further comprises a second fabric layer adjacent to and in a face-to-face relationship with the nanofiber layer and an the opposite side of the nanofiber layer from the first fabric layer and that the composite fabric has a Frazier air permeability according to ASTM D737 of between 1.2 m³/m²/min and 7.6 m³/m²/min, and an MVTR according to ASTM E 96B of greater than about 500 g/m²/day.

2. The article of apparel of claim 1 in which the nanofiber layer and the fabric layer are bonded to each other over a fraction of their surfaces.

3. The article of apparel of claim 2 in which the nanofiber layer and the fabric layer are bonded to each other with a solvent-based adhesive.

4. The article of apparel of claim 2 in which the composite fabric is produced by electrospinning or electroblowing the nanofiber layer directly onto the surface of the fabric layer and the nanofiber layer and the fabric layer are bonded to each other by residual solvent from the electrospinning or electroblowing processes.

5. The article of apparel of claim 3 in which the nanofiber layer and the fabric layer are bonded to each other with a polyurethane adhesive.

6. The article of apparel of claim 2 in which the nanofiber layer and the fabric layer are thermally bonded to each other.

7. The article of apparel of claim 2 in which the nanofiber layer and the fabric layer are ultrasonically bonded to each other.

8. The article of apparel of claim 1 in which the nanofiber layer comprises nanofibers of a polymer selected from the group consisting of polyacetals, polyamides, aramids, polyolefins, polyesters, cellulose ethers, cellulose esters, polyalkylene sulfides, polyarylene oxides, polysulfones, modified polysulfone polymers, and mixtures thereof.

9. The article of apparel of claim 1 in which the nanofiber layer comprises nanofibers of a polymer selected from the group consisting of poly(vinylchloride), polymethylmethacrylate, polystyrene, and copolymers thereof, poly(vinylidene fluoride), poly(vinylidene chloride), polyvinylalcohol in crosslinked and non-crosslinked forms.

10. The article of apparel of claim 8 in which the nanofiber layer comprises nanofibers of a polymer selected from the group consisting of nylon-6, nylon-6,6, and nylon 6,6-6,10.

11. The article of apparel of claim 1 in which the nanofiber layer is calendered.

12. The article of apparel of claim 11 in which the nanofiber layer is calendered while in contact with the fabric layer.

13. The article of apparel of claim 1 in which the fabric layer comprises woven materials selected from the group consisting of nylon, cotton, wool, silk, polyester, polyacrylic, polyolefin, and combinations thereof.

14. The article of apparel of claim 1 in which the fabric layer comprises woven fibers having a tenacity of less than about 8 gpd.

15. The article of apparel of claim 1 in which the fabric layer comprises woven fibers having a tenacity of less than about 5 gpd.

## Patentansprüche

1. Kleidungsstück, das wasserdampfdurchlässig ist und dabei den Träger gegen Wind schützt, umfassend einen Textilverbundstoff mit einer an eine Nanofaserschicht angrenzenden und dieser zugewandten ersten Stofflage aufweist, wobei die Nanofaserschicht mindestens eine poröse Schicht aus polymeren Nanofasern umfasst, mit einem Zahlenmittel des Durchmessers zwischen 50 nm und 1000 nm, einem Crrundgewicht zwischen 1 g/m² und 100 g/m², **dadurch gekennzeichnet, daß** er ferner eine zweite Stofflage aufweist, die auf der der ersten Stofflage gegenüberliegenden Seite der Nanofaserschicht an die Nanofaserschicht angrenzt und dieser zugewandt ist, und dass der Textilverbundstoff eine Luftdurchlässigkeit nach Frazier gemäß ASTM D737 zwischen 1,2 m³/m²/min und 7,6 m³/m²/min und eine Wasserdampfdurchlassgeschwindigkeit (MVTR) gemäß ASTM E 96B von mehr als 500 g/m²/Tag aufweist.

2. Kleidungsstück nach Anspruch 1, wobei die Nanofaserschicht und die Stofflage über einen Teil ihrer Oberflächen miteinander verbunden werden.

3. Kleidungsstück nach Anspruch 2, wobei die Nanofaserschicht und die Stofflage mit einem lösungsmittelhaltigen Klebstoff miteinander verklebt werden.

4. Kleidungsstück nach Anspruch 2, wobei der Textilverbundstoff durch Elektrospinnen oder Elektroblasen der Nanofaserschicht direkt auf die Oberfläche der Stofflage erzeugt wird und die Nanofaserschicht und die Stofflage durch restliches Lösungsmittcl aus den Elektrospinn- oder Elektroblasverfahren miteinander verbunden werden.

5. Kleidungsstück nach Anspruch 3, wobei die Nanofaserschicht und die Stofflage mit einem Polyurethanklebstoff miteinander verklebt werden.

6. Kleidungsstück nach Anspruch 2, wobei die Nanofaserschicht und die Stofflage thermisch miteinander verbunden werden.

7. Kleidungsstück nach Anspruch 2, wobei die Nanofaserschicht und die Stofflage durch Ultraschall miteinander verbunden werden.

8. Kleidungsstück nach Anspruch 1, wobei die Nanofaserschicht Nanofasern aus einem Polymer aufweist, das aus der Gruppe ausgewählt ist, die aus Polyacetalen, Polyamiden, Aramiden, Polyolefmen, Polyestern, Celluloseethern, Celluloseestern, Polyalkylensulfiden, Polyarylenoxiden, Polysulfonen, modifizierten Polysulfon-Polymeren und Gemischen davon besteht.

9. Kleidungsstück nach Anspruch 1, wobei die Nanofaserschicht Nanofasern aus einem Polymer aufweist, die aus der Gruppe ausgewählt sind, die aus Poly(vinylchlorid), Polymethylmethacrylat, Polystyrol und Copolymeren davon, Poly(vinylidenfluorid), Poly(vinylidenchlorid), Polyvinylalkohol in vernetzten und unvernetzten Formen besteht.

10. Kleidungsstück nach Anspruch 8, wobei die Nanofaserschicht Nanofasern aus einem Polymer aufweist, das aus der Gruppe ausgewählt ist, die aus Nylon-6, Nylon-6,6 und Nylon 6,6-6,10 besteht.

11. Kleidungsstück nach Anspruch 1, wobei die Nanofaserschicht kalandriert wird.

12. Kleidungsstück nach Anspruch 11, wobei die Nanofaserschicht kalandriert wird, während sie sich im Kontakt mit der Stofflage befindet.

13. Kleidungsstück nach Anspruch 1, wobei die Nanofaserschicht Gewebe aufweist, die aus der Gruppe ausgewählt sind, die aus Nylon, Baumwolle, Wolle, Seide, Polyester, Polyacryl, Polyolefin und Kombinationen davon besteht.

14. Kleidungsstück nach Anspruch 1, wobei die Stofflage Gewebefasern mit einer Reißfestigkeit von weniger als etwa 8 g/den aufweist.

15. Kleidungsstück nach Anspruch 1, wobei die Stofflage Gewebefasern mit einer Reißfestigkeit von weniger als etwa 5 g/den aufweist.

## Revendications

1. Article vestimentaire ayant la capacité de laisser traverser la vapeur d'eau tout en protégeant le porteur du vent comprenant un textile composite qui comprend une première couche de textile adjacente à et en relation face-à-face avec une couche de nanofibres, dans lequel la couche de nanofibres comprend au moins une couche poreuse de nanofibres polymères ayant un diamètre moyen en nombre compris entre 50 nm à 1 000 nm, un poids de base compris entre 1 g/m² et 100 g/m², **caractérisé en ce qu'**il comprend en outre une seconde couche de textile adjacente à et en relation face-à-face avec la couche de nanofibres et sur le côté opposé de la couche de nanofibres à partir de la première couche de textile, et **en ce que** le textile composite a une perméabilité à l'air de Frazier selon la norme ASTM D737 de 1,2 m³/m²/min et 7,6 m³/m²/min, et un MVTR selon la norme ASTM E96B supérieur à environ 500 g/m²/jour.

2. Article vestimentaire selon la revendication 1, dans lequel la couche de nanofibres et la couche de textile sont liées l'une à l'autre sur une partie de leurs surfaces.

3. Article vestimentaire selon la revendication 2, dans lequel la couche de nanofibres et la couche de textile sont liées l'une à l'autre à l'aide d'un adhésif à base de solvant.

4. Article vestimentaire selon la revendication 2, dans lequel le textile composite est produit par électrofilature ou électrosoufflage de la couche de nanofibres directement sur la surface de la couche de textile et la couche de nanofibres et la couche de textile sont liées l'une à l'autre par un solvant résiduel issu des procédés d'électrofilature ou d'électrosoufflage.

5. Article vestimentaire selon la revendication 3, dans lequel la couche de nanofibres et la couche de textile sont liées l'une à l'autre avec un adhésif du type polyuréthane.

6. Article vestimentaire selon la revendication 2, dans lequel la couche de nanofibres et la couche de textile sont thermiquement liées l'une à l'autre.

7. Article vestimentaire selon la revendication 2, dans lequel la couche de nanofibres et la couche de textile sont liées l'une à l'autre par traitement aux ultrasons.

8. Article vestimentaire selon la revendication 1, dans lequel la couche de nanofibres comprend des nanofibres d'un polymère choisi parmi le groupe constitué des polyacétals, polyamides, aramides, polyoléfines, polyesters, éthers de cellulose, esters de cellulose, poly(sulfures d'alcylène), poly(oxydes d'arylène), polysulfones, polymères de polysulfone modifiés, et mélanges de ceux-ci.

9. Article vestimentaire selon la revendication 1, dans lequel la couche de nanofibres comprend des nanofibres d'un polymère choisi parmi le groupe constitué du poly(chlorure de vinyle), poly(méthacrylate de méthyle), polystyrène, et des copolymères de ceux-ci, du poly(fluorure de vinylidène), poly(chlorure de vinylidène), poly(alcool de vinyle) sous des formes réticulées et non réticulées.

10. Article vestimentaire selon la revendication 8, dans lequel la couche de nanofibres comprend des nanofibres d'un polymère choisi parmi le groupe constitué du nylon-6, nylon-6,6, et nylon 6,6-6,10.

11. Article vestimentaire selon la revendication 1, dans lequel la couche de nanofibres est calandrée.

12. Article vestimentaire selon la revendication 11, dans lequel la couche de nanofibres est calandrée tout en étant en contact avec la couche de textile.

13. Article vestimentaire selon la revendication 1, dans lequel la couche de textile comprend des matériaux tissés choisis parmi le groupe constitué du nylon, du coton, de la laine, de la soie, du polyester, du polyacrylique, d'une polyoléfine, et des combinaisons de ceux-ci.

14. Article vestimentaire selon la revendication 1, dans lequel la couche de textile comprend des fibres tissées ayant une ténacité inférieure à environ 8 grammes par denier.

15. Article vestimentaire selon la revendication 1, dans lequel la couche de textile comprend des fibres tissées ayant une ténacité inférieure à environ 5 grammes par denier.
